# NEW EUROPEAN PATENT SPECIFICATION

(11) **EP 1 687 951 B2**
(45) Date of publication and mention of the opposition decision: **01.08.2018**
(45) Mention of the grant of the patent: 24.08.2011
(21) Application number: 04783854.5
(22) Date of filing: 10.09.2004
(51) Int. Cl.: H04L 29/06, H04L 29/12, H04L 12/28, H04L 12/46

(54) **Method for communicating over the internet with geographically distributed devices**
Verfahren zum Kommunizieren über das Internet mit geographisch verteilten Einrichtungen
Procédé pour communiquer sur l'internet avec des dispositifs répartis géographiquement

(30) Priority: 27.10.2003 US 514672 P; 16.06.2004 US 869208
(43) Date of publication of application: 09.08.2006
(73) Proprietor: Rovi Solutions Corporation, San Jose CA 95002 (US)
(72) Inventor: LEVIN, Steven, L., Sunnyvale, CA 94086 (US); DISHER, Jonathan, Sunnyvale, CA 94086 (US)
(74) Representative: Pisani, Diana Jean
(86) International application number: PCT/US2004/029798
(87) International publication number: WO 2005/046174

(56) References cited:
- US-A1- 2002 141 387
- DIAS D M ET AL: "A scalable and highly available web server" 25 February 1996 (1996-02-25), DIGEST OF PAPERS OF COMPCON (COMPUTER SOCIETY CONFERENCE) 1996 TECHNOLOGIES FOR THE INFORMATION SUPERHIGHWAY. SANTA CLARA, FEB. 25 - 28, 1996, DIGEST OF PAPERS OF THE COMPUTER SOCIETY COMPUTER CONFERENCE COMPCON, LOS ALAMITOS, IEEE COMP. SOC. PRESS, , XP010160879 ISBN: 0-8186-7414-8 page 87, left-hand column, line 11 - right-hand column, line 27
- SCHROEDER T ET AL: "SCALABLE WEB SERVER CLUSTERING TECHNOLOGIES" IEEE NETWORK, IEEE INC. NEW YORK, US, vol. 14, no. 3, May 2000 (2000-05), pages 38-45, XP001195395 ISSN: 0890-8044

## Description

### FIELD OF THE INVENTION

The present invention generally relates to communicating with devices of a decentralized network and in particular, to a system and methods for communicating over the Internet with geographically distributed devices of a decentralized network using transparent asymmetric return paths.

### BACKGROUND OF THE INVENTION

A decentralized network such as peer-to-peer file sharing networks employing the Internet may connect millions of devices around the world together for the sharing of information. A system that monitors certain aspects of such sharing should have a global presence that covers the geographical span of the decentralized network.

Because of the way most peer-to-peer networks function, efficiently of operation is best achieved by the system having a presence on globally diverse networks, especially in major metropolitan areas where there is a significant broadband penetration. This presents a system architecture problem, however, where a lean system is desired that is relatively cheap to implement and easy to maintain.

Traditional methods of structuring such a system involve either the deployment of large numbers of expensive clusters, or backhauling expensive data circuits from many global points of presence back to a central datacenter. Each of these methods, however, is very costly.

In particular, the deployment of many clusters of machines in many locations around the world on diverse networks is extremely expensive to implement, difficult to manage, and highly inefficient. It also does not scale well since a lack of resources in one point of presence cannot easily be compensated for with a glut of resources in another location.

A backhauled data circuit, on the other hand, that is deployed to peer with many networks on a global scale is usually even more cost prohibitive since routers and long-haul circuits are expensive, and peering arrangements generally take large amounts of time and money to complete.

In addition, in monitoring the information sharing activity in a decentralized network, it may be useful for a system to include agents to masquerade as one or more devices in the decentralized network. In such a system, communications with the devices should use either a symmetric return path (i.e., the agent receiving the original communication from a device returns any reply generated by a centralized data center back to the device) or use a transparent asymmetric return path (i.e., the centralized data center returns the reply to the device directly, but in such a fashion that it appears to the device that the reply is being sent by the agent) in order to maintain the agent's masquerade.
As an example of a symmetric return path, "Impact of the Evolution of the Metropolitan Network on the DSL Access Architecture", 2003 IEEE, describes an ATM access network in which DSL access multiplexers (DSLAMS) connect customer premises equipment (CPE) to a broadband access server (BAS) through virtual circuits.

Dias, D.M. et al., "A Scalable and Highly Available web Server," 25 February 1996 (1996-02-25), Digest of Papers of COMPCON (Computer Society Conference) 1996 Technologies of the Information Superhighway, Santa Clara, Feb. 25-28, 1996, Digest of Papers of the Computer Society Computer Conference COMPCON, Los Alamitos, IEEE Comp. Soc. Press, XXP010160879 ISBN: 0-8186-7414-8, describes a scalable web server which provides load balancing by routing packets received by a TCP router from a client to a different front-end web server nodes in a round-robin order. The server nodes directly send the request back to the client without using the router. However, the server nodes change the source address on the packets sent back to the client to be that of the router node. This makes the entire routing action transparent to the clients.

Although Dias uses transparent asymmetric return paths, it also uses a cluster approach wherein the TCP router and front-end web server nodes are part of a same cluster. Thus, it is not resource efficient for the present application of monitoring certain aspects of file sharing activities in a decentralized network having a global presence. Also, it does not efficiently handle continued transmissions in the event of a line bounce. Because of the load balancing between multiple web server nodes, transmissions cannot continue from where it left off prior to the line bounce, requiring the transmission to restart from the beginning. CONTENT DISTRIBUTION NETWORKS, An Engineering Approach, by Dinesh C. Verma discloses site design and scalability in content distribution networks, including load balancers using network address translation.
Aspects of the present invention are set out in the appended independent claims.
An embodiment comprises a method for communicating with devices in a decentralised network, comprising: receiving a packet in a point of presence from a device; routing the packet according to a virtual circuit from the point of presence to an application computer of a centralised data center, wherein the virtual circuit is defined such that subsequently received packets in the point of presence from the device are also routed according to the virtual circuit from the point of presence to the application computer; generating a reply packet by the application computer processing information in the packet; and transmitting the reply packet back to the device from the application computer in such a fashion that it appears to the device that the reply packet is being sent by the point of presence.

Features and advantages of the embodiments of the present invention will become apparent from the following description of its preferred embodiment, which description should be taken in conjunction with the accompanying drawings.

### BRIEF DESCRIPTION OF THE DRAWING

**FIG. 1** illustrates a block diagram of a system for communicating with devices of a decentralized network organized into geographical regions, according to an embodiment of the present invention.
**FIG. 2** illustrates a block diagram detailing a portion of the system for communicating with devices of one geographical region of the decentralized network, according to an embodiment of the present invention.
**FIG. 3** illustrates a flow diagram of a method for activating a virtual circuit, according to an embodiment of the present invention.
**FIG- 4** illustrates a flow diagram of a method for releasing an active virtual circuits, according to an embodiment of the present invention.
**FIG. 5** illustrates a flow diagram of a first method for transmitting information to set-up a virtual circuit.
**FIG. 6** illustrates a flow diagram of a method for communicating over the Internet with devices of a decentralized network, corresponding Lo the virtual circuit set-up described in **FIG. 5****.**
**FIG. 7** illustrates a flow diagram of a second method for transmitting information to set-up a virtual circuit, according to an embodiment of the present invention.
**FIG. 8** illustrates a flow diagram of a method for communicating over the Internet with devices of a decentralized network, corresponding to the virtual circuit set-up described in FIG. 7 and according to an embodiment of the present invention.

### DETAILED DESCRIPTION OF THE PREFERRED EMBODIMENT

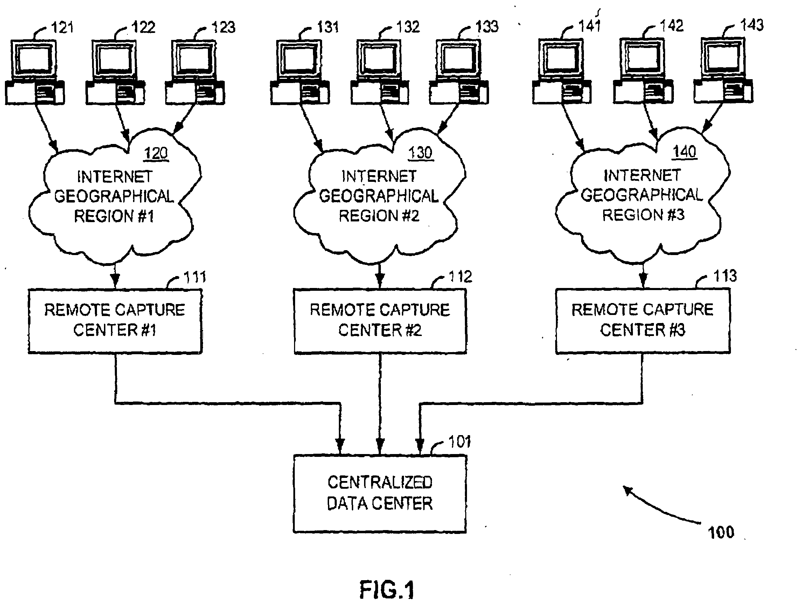

**FIG. 1** illustrates, as an example, a block diagram of a system 100 configured to implement the various methods described herein that are applicable to communicating over the Internet with devices of a decentralized network over the Internet. The system 100 includes a centralized data center 101 and a plurality of remote capture centers such at **111∼113** that are geographically distributed so as to receive communications from devices in their respective geographical regions. Each remote capture center may be thought of in this case as a conventional point of presence ("POP") that provides an access point to the Internet.

In the example, the locations of the devices are organized into three geographical regions according to their IP addresses. In a first geographical region **120**, a first remote capture center **111** is physically located so as to receive packets of information from a number of devises such as computers 121∼123. Likewise, in a second geographical region **130**, a second remote capture center **112** is physically located so as to receive packets of information from a number of devices such as computers 131∼133. Finally, in a third geographical region **140**, a third remote capture center **113** is physically located so as to receive packets of information from a number of devices such as computers **141∼143**. In an actual implementation, additional remote capture centers may be deployed to cover additional geographical regions so as to provide a truly global presence for the system.

The remote capture centers send their received packets of information over the Internet to the centralized data center **101** for processing. The transmission may be over the public Internet or a Virtual Primate Network ("VPN"). In either case, since the Internet is used instead of routers and a leased line, high costs associated with a backhauled data circuit are avoided. Also, since the processing of packets is performed at the centralized data center **101** instead of the remote capture centers, this makes the system 100 relatively inexpensive to implement since it only requires deployment of a few relatively cheap and less powerful machines in each of the remote capture centers (usually 3 or 4 per POP).

The system 100 is also scaleable and relatively more efficient to manage since processing can be easily distributed between computation machines in the centralized data center **101** to balance their work loads. Further, resources can be added when overall system demands require it at one location (i.e., the centralized data center **101**) rather than at many distant locations (i.e., the remote capture centers) where they may wind up being under or over utilized. Thus, the system 100 avoids the drawbacks associated with an approach that deploys many clusters of machines around the world without central processing.

After processing the packets, the centralized data center **101** transmits reply packets back to the devices directly rather than sending them back through the original routes from which they came. Thus, asymmetric return path are used in the system 100 to avoid burdening the remote capture centers with a relay function and to save reply packet transit time. Since the devices receiving the reply packets expect the reply packets to come from the destination IP addresses to which the original packets were sent, the centralized data center 101 transmits these packets back to the devices in such a manner that the reply packets appear to have come from their respective destination IP addresses, thereby making the asymmetric return paths transparent to these devices.

Thus, the system 100 transparently intercepts and transits unidirectional or bidirectional streams of data from one location to another with an asymmetric return path. Its primary function is to allow a broad geographic presence without deploying a large infrastructure in multiple remote locations around the globe. A secondary benefit of the system 100 is its ability to masquerade it's processing and transmission location securely behind the identity of the remote endpoint (i.e., an IP address associate with one of its remote capture centers).

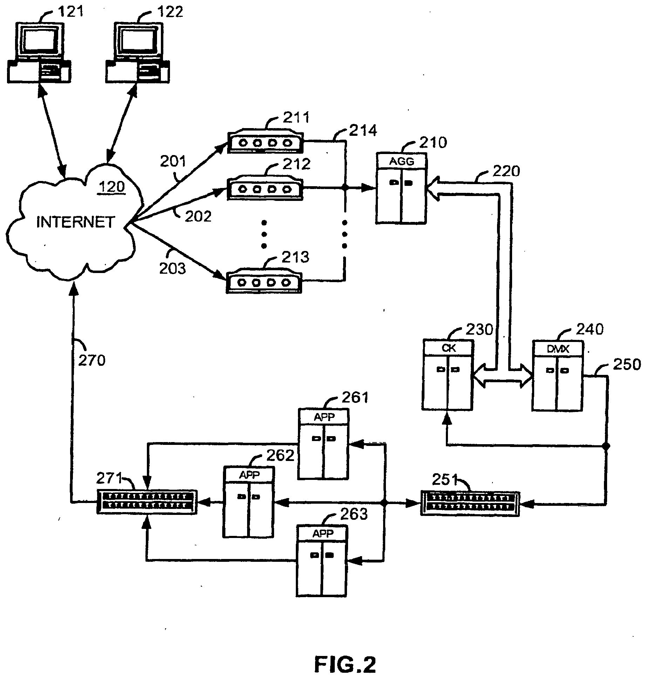

**FIG. 2** illustrates, as an example, a block diagram including a portion of the system 100 for communicating with device such as computer **121** in tne first geographical region **120.** In the example, multiple DSL lines such as **201∼203** are brought in, usually using Point-to-Point Protocol over Ethernet ("PPPoE") as a transport, from multiple DSL service providers (such as Speakeasy, EarthLink, Covad, SBC, BT, Telewest, NTL, SingTel or Telestra) to their respective DSL modems such as **211∼213** in the remote capture center **111.** This arrangement provides TP address diversity while at the same time allows realistic simulation of an average device in a decentralized network of interest. Although the use of DSL is shown throughout this example, other mediums such as T1, ISDN, cable modem, Ethernet handoff, and even dial-up may also be used.

The DSL modems are connected over Ethernet **214** (e.g., 100BaseTX) to an aggregator computer **210,** which is also in the remote capture center **111.** Although only one such aggregator is shown in this example, in practise, multiple aggregators may be used in each remote capture center. The aggregators may typically have no more than 8 or 9 DSL modems connected to them (using quad-port PCI Ethernet network interface cards for port density) - Due to the nature of PPPoE, the DSL modems are preferably connected to the Ethernet ports on the aggregator **210,** not aggregated by a switch.

The aggregator computer **210** takes each incoming packet off Ethernet **214** and its packet filter re-writes a destination address in the packet from an original destination address associated with the remote capture center **111** to an address associated with the centralized data center **101** according to re-write rules previously provided to the aggregator **210** as part of setting up a virtual circuit between the aggregator computer **210** and an application computer in the centralized data center **101** which is to process the packet. The original destination address in this case is the IP address of the DSL modem that received the packet, which is typically provided by the DSL service provider.

The header of an IP packet conventionally includes both a source IP address indicating where the packet originated from (i.e., the sending node), and a destination IP address indicating where the packet is to go (i.e., the receiving node). A header checksum is also included to ensure IP header integrity. When replacing the original destination address with the aliased address, the checksum may also be changed accordingly to maintain header integrity.

After rewriting the destination address indicated in the packet, the packet is passed to the kernel of the aggregator computer **210** which determines that the destination address is not a local address so it routes the packet over a VPN tunnel **220** (using IPSEC or PPTP) to the demux computer **240** in the centralized data center **101** according to a static route defined in a routing table of the aggregator computer **210** at the time that the virtual circuit was set-up. In this case, the address associated with the demux computer **240** is a private range address, such as an aliased address dedicated to the virtual circuit. Although use of a VPN tunnel is preferred for security reasons, communications can also be performed by the aggregator computer **210** routing the packet over the public Internet without a VPN tunnel to a public range address on the demux computer **240**.

After receiving the packet, a packet filter of the demux computer **240** rewrites the destination address from the address associated with the demux computer **240** to an address associated with the application computer which is to process the packet, according to re-write rules previously provided to the demux computer **240** as part of setting up the virtual circuit. The packet is then passed to the kernel of the demux computer **240**, which determines that the destination address is not a local address so it routes the packet over Ethernet **250** to the application computer that is to process the packet, using another static route defined in a routing table of the demux computer **240** at time that the virtual circuit was set up. The application computer in this case has a resident application program which has initiated the virtual circuit and will process the packet.

Once the packet is passed to the application computer, its kernel determines that the destination address matches a local address, and passes the packet to the application program which is to process the packet. The application program in this case is the one that originally requested that the virtual circuit be set up, and the kernel recognizes that application program, because it is bound to the address currently in the destination address of the packet and to the proper port of the application computer.

After processing the packet to generate a reply packet, the application program sends the reply packet out the application computer's public IP interface or default gateway (using, for example, a Gig-E or OC-48 uplink) back to the device that originally sent the packet to the remote capture center **111.** The reply packet received by the device will have the source IP address in the originally received packet (i.e., the IP address of the computer **121** which originally sent the packet) as its destination IP address, and the destination IP address in the originally received packet (i.e., the IP address of the receiving DSL modem) as its source IP address. Thus, the reply packet is returned using a transparent asymmetric return path.

A key part of the system 100 is an automatic circuit management function performed by an administrative node **230,** which is also referred to herein as the circuit keeper. The circuit keeper **230** maintains a list of active virtual circuits (i.e., virtual circuits that are currently in use) and a list of available virtual circuits (i.e., virtual circuits that are currently available to be assigned for use). Each virtual circuit defines a path of transmission for a packet, starting with a computer in the remote capture center that is to receive packets from devices in a decentralized network, and ending with an application computer that is to process the packet.

The circuit keeper computer **230** includes automated administration tools, which are responsible for building up and tearing down transit connections from end to end on a dynamic basis. Since DSI, is not as reliable as the carrier class connectivity solutions (such as T1), it is not unusual for a virtual circuit connection to bounce up and down in a relatively short period of time. Therefore, the automated administration tools are able to automate the process of connecting to the DSL provider, authenticating, getting an IP address, setting up the end-to-end rewrite rules and static routes on computers associated with the virtual circuit, and monitoring link availability- To do so, the automated administration tools are configured to bring up DSL connections on the aggregator computer 210, maintain tables of available and active virtual circuits, IP addresses and rewrite rules, and pass virtual circuit set-up information on to computers associated with the virtual circuit.

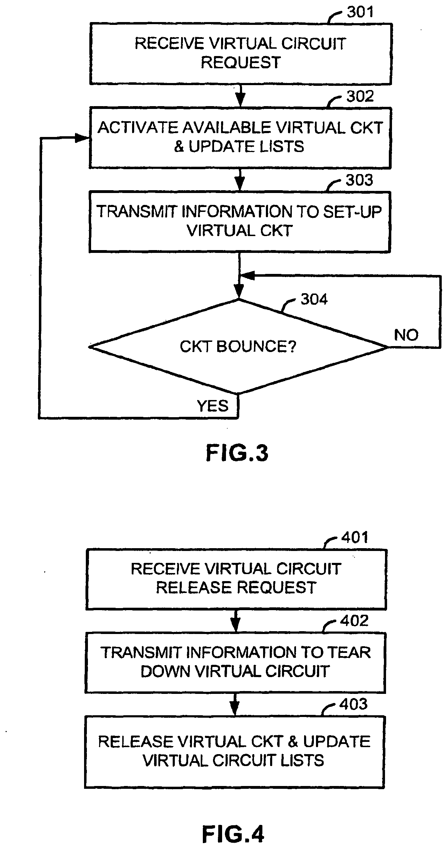

**FIG. 3** illustrates, as an example, a flow diagram of a method for activating a virtual circuit that facilitates setting up various static routes and re-write rules on computers associated with the virtual circuit. In **301**, the circuit keeper computer **230** receives a request to activate an available virtual circuit. The request in this case commonly comes from an application program acting as an agent that will process incoming packets through a designated modem or remote capture center. In **302**, if the virtual circuit is available (i.e., not currently being used), then the circuit keeper computer **230** activates the virtual circuit and updates the active and available virtual circuit lists accordingly.

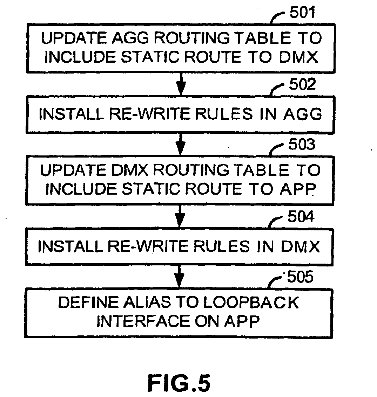

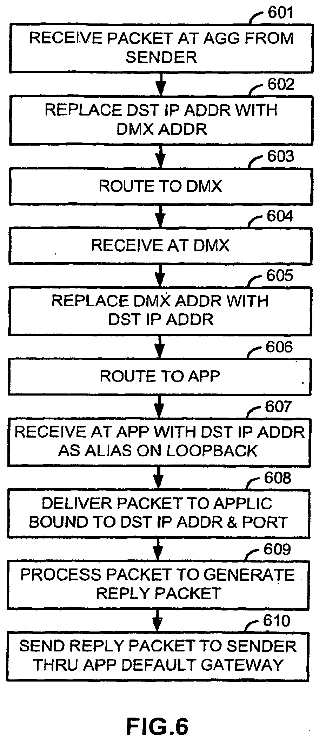

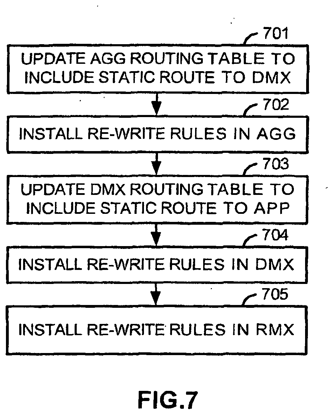

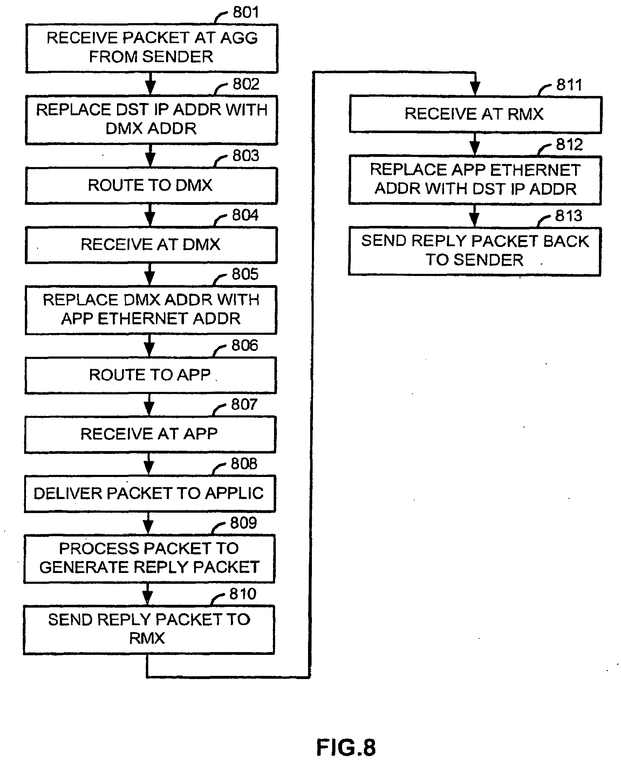

As previously described, the virtual circuit defines a path of transit for the packet, which is preferably specified in the form of static routes. In **303**, the circuit keeper **230** transmits information to computers associated with the virtual circuit to set up the virtual circuit. The specific information transmitted and the recipients of that information depend upon the method being used to communicate with devices of a decentralized network using transparent asymmetric return paths. As will be described below, an example of one such method is described in reference to **FIGS. 5** **and** **6**, and an example of another such method is described in reference to **FIGS. 7** and **8**.

In **304**, a determination is made whether or not the virtual circuit has bounced (i.e., the DSL link has been dropped or lost). As long as the virtual circuit has not bounced or been released, then no action with respect to the virtual circuit is made by the circuit keeper computer 230.
On the other hand, if the virtual circuit is detected to have been bounced, then the circuit keeper computer **230** proceeds back to **302** to activate another available virtual circuit to take the bounced circuit's place, and update the active and available virtual circuit lists accordingly. The circuit keeper computer **230** then sets up the new virtual circuit by performing **303** again, and checks for another circuit bounce by performing **304** again.

**FIG. 4** illustrates, as an example, a flow diagram of a method for releasing an active virtual circuit. The method in this case comprises essentially reverse actions of those taken in activating and setting up the virtual circuit. In **401,** the circuit keeper computer **230** receives a virtual circuit release request. In **402,** it transmits information and/or instructions to tear down the virtual circuit by removing, for example, all static routes and re-write rules previously provided to computers associated with the virtual circuit. In **403,** the circuit keeper computer **230** then updates the virtual circuit lists by removing the virtual circuit from the active circuits list and re-entering it in the available circuits list.

**FIG. 5** illustrates a flow diagram of a first method for transmitting information to set-up a virtual circuit to perform **303** of **FIG. 3**. Note that the following tasks may be handled in the order shown in **FIG. 5** or in another order. Also, some or all of the tasks may be performed around the same time so as to be performed substantially concurrently.

In **501**, the circuit keeper computer **230** sends information to the aggregator computer **210** to update its routing table to include a static route so that packets addressed to an address associated with the demux computer **240** are sent to the demux computer **240**. As previously described, the address in this case may be an aliased address assigned to the virtual circuit if communications to the demux computer **240** are to be sent over the VPN tunnel **220,** or it may be a public IP address if communications to the demux computer **240** are to be sent over the public Internet.

In **502,** the circuit keeper computer **230** also sends information to the aggregator computer **210** to update its iptables so that packets having a certain destination address associated with the aggregator computer **210** (such as the IP address assigned to one its DSL modems) is re-written from the original destination address to the address associated with the demux computer **240.**

In a similar manner, in **503,** the circuit keeper computer **230** sends information to the demux computer **240** to update its routing table to include a static route so that packets addressed to an address associated with the application computer associated with the virtual circuit are sent to that application computer. The address in this case is the original destination address.

In **504,** the circuit keeper computer **230** also sends re-write information to the demux computer **240** to update its iptables so that packets having the address associated with the demux computer **240** as their destination address are re-written back to the original destination address.

In **505,** an application program residing on the application computer that is associated with the virtual circuit assigns the original destination address as an alias to the loopback interface of the application computer, modifies the routing table of the application computer to include to the aliased address, and binds itself to the original destination address and a port of the application computer that is reserved for its use. Consequently, when the application computer receives a packet with the original destination address (i.e., the IP address assigned to a DSL modem of the aggregator computer **210**) indicated as its destination address, the kernel of the application computer recognizes that the packet is to be processed locally and passes the packet to the application program that is bound to that original destination address and the previously assigned port.

In order to tear down this virtual circuit, not only are the routing tables and iptables of the aggregator computer **210** and the demux computer **240** placed back into their original form (i.e., before adding the static routes and re-write rules described in reference to **FIG. 5**), the application computer is also instructed to delete the original destination address alias to its loopback interface, and release the application program so that it is no longer bound to the original destination address and assigned port.

**FIG.6** illustrates, as an example, a flow diagram of a method for communicating over the Internet with devices in a decentralized network that corresponds to the virtual circuit set-up described in reference to **FIG. 5****.** In **601,** an IP packet is received at the aggregator computer **210** through its DSL modem **211** from a remote user of client computer **121.** The remote user in this example is physically located in Kansas with an IP address of 1.1.1.1, and the aggregator computer **210** and its DSL modem **211** are physically located in Colorado with an IP address of 2.2.2.2 assigned to the DSL modem **211** by its ISP. Therefore, at this time, the IP packet has a source IP address of 1.1.1.1 and a destination IP address of 2.2.2.2.

In **602,** before passing the packet to its kernel, the packet header is modified by using the kernel-level packet filter and mangling system iptables of the aggregator computer **210** so that the destination address is rewritten in the IP packet to 172.16.0.3, which is an aliased address assigned during virtual circuit set-up to point to the demux computer **240.**

In **603,** the packet is then passed to the kernel of the aggregator computer **210** which looks at the source and destination IP addresses indicated in the packet. The kernel, finding that the destination address is not a local address, but one that is in its routing table, passes the packet over the inter-site VPN tunnel **220** to the demux computer **240.** At this point, the IP packet has a source IP address of 1.1.1.1 and a destination IP address of 172.16.0.3.

In **604,** the packet is received at the demux computer **240,** and in **605,** its destination IP address is again re-written, this time back to the original destination IP address 2.2.2.2. After the destination IP address is re-written in the packet, the packet is passed to the kernel of the demux computer **240.** The kernel sees that the destination address of the packet is not a local address, but one that is in its routing table,, so in **606,** it routes the packet over Ethernet **250** to the application computer **261** that is to process the packet. At this point, the IP packet has its original source IP address of 1.1.1.1 and original destination IP address of 2.2.2.2.

In **607,** the application computer receives the incoming packet from the demux computer **240,** and its kernel discovers that the packet has a destination IP address that is a local address defined in its routing table as an alias to the loopback interface, and therefore, in **608,** it delivers the packet to an application program that resides on the application computer and is bound to the original destination IP address and the correct port. In **609,** the application program then processes the packet, and generates a reply packet if appropriate. In **610,** the reply packet is then sent back out through the default gateway of the application computer to remote user in Kansas by the kernel of the application computer. The reply packet at this time has a source IP address of 2.2.2.2 and destination IP address of 1.1.1.1, so that it appears that the reply packet is being sent from the DSL model **211** that originally received the packet.

**FIG. 7** illustrates a flow diagram of a second and preferred method for transmitting information to set-up a virtual circuit to perform **303** of **FIG. 3****.** One advantage of this method is that it allows the use of the same remote IP address on multiple application computers by including a destination port indication along with the destination address. This is particularly useful where computational sources are at a premium, and bandwidth is available. In the method described in **FIG. 7****,** note that the following tasks may be handled in the order shown or in another order. Also, some or all of the tasks may be performed around the same time so as to be performed substantially concurrently.

In **701,** the circuit keeper computer **230** sends information to the aggregator computer **210** to update its routing table to include a static route so that packets addressed to an address associated with the demux computer **240** are sent to the demux computer **240.** As previously described, the address in this case may be an aliased address assigned to the virtual circuit if communications to the demux computer **240** are to be sent over the VPN tunnel **220,** or it may be a public IP address if communications to the demux computer **240** are to be sent over the public Internet.

In **702,** the circuit keeper computer **230** also sends information to the aggregator computer **210** to update its iptables so that packets having a certain destination address associated with the aggregator computer **210** (such as the IP address assigned to one its DSL modems) is re-written from the original destination address to the address associated with the demux computer **240.**

In a similar manner, in **703,** the circuit keeper computer **230** sends information to the demux computer **240** to update its routing table to include static routes pointing to application computers that are associated with the same destination IP address, but different destination ports so that its kernel can determine which of the application computers to route the packet to by looking at the destination port at OSI Layer 4 as well as the destination address at OSI Layer 3.

In **704,** the circuit keeper computer **230** also sends re-write rules information to the demux computer **240** to update its iptables so that packets having the address associated with the demux computer **240** as their destination address are re-written so that their respective destination addresses are Ethernet addresses associated with application computers corresponding to their respective destination ports.

In **705,** the circuit keeper computer **230** also sends re-write rules information to a remux computer 271 to update its iptables so that packets having the addresses associated with the application computers as their source addresses are re-written to the original destination IP address and destination port. The remux computer 271 in this example serves as a remultiplexing egress router for a common default gateway of the application computers.

In order to tear down this virtual circuit, the routing tables and iptables of the aggregator computer **210,** the demux computer **240** and the remux computer **271** are placed back into their original form (i.e., before adding the static routes and re-write rules described in reference to **FIG. 7****).** The application computers are also instructed to release their respective application programs so that they are no longer bound to the original destination address and their assigned ports.

**FIG.8** illustrates, as an example, a flow diagram of a method for communicating over the Internet with devices in a decentralized network that corresponds to the virtual circuit set-up described in reference to **FIG. 7****.** In this example, a first remote user using client computer **121** in the first geographical region **120** sends an IP packet having a source IP address of 1.1.1.1, destination IP address of 2.2.2.2 and destination port 4000, and a second remote user using client computer **122** also in the first geographical region **120** sends a packet having a source IP address of 3.3.3.3, destination IP address of 2.2.2.2 and destination port 5000 to the aggregator computer **210.**

Accordingly, there are two virtual circuits used in this example. The first virtual circuit starts with the aggregator computer **210,** and ends, for example, with application computer **261.** An application program residing on the application computer **261** has initiated this virtual circuit and bound itself, for example, to an Ethernet address and assigned port of the application computer **261.** The second virtual circuit, on the other hand, starts with the aggregator computer **210,** and ends, for example, with application computer **262.** An application program residing on the application computer **262** has initiated this second virtual circuit and bound itself, for example, to an Ethernet address and assigned port of the application computer **262.**

In **801,** the two IP packets are received at the aggregator computer **210** respectively at its port 4000, for example, from the remote user of client computer **121** through Ethernet **214** and DSL modem **211,** and at its port 5000, for example, from the remote user of client computer **122** through Ethernet **214** and DSL modem **212.** The first remote user in this example is physically located in Kansas with an IP address of 1.1.1.1, the second remote user is physically located in Missouri with an IP address of 3.3.3.3, and the aggregator computer **210** and its DSL modem **211** are physically located in Colorado with an IP address of 2.2.2.2 assigned to the DSL modem **211** by its ISP. Therefore, at this time, the first IP packet has a source IP address of 1.1.1.1 and a destination IP address of 2.2.2.2, port 4000, and the second IP packet has a source IP address of 3.3.3.3 and a destination IP address of 2.2.2.2, port 5000.

In **802**, before passing the packets to its kernel, their packet headers are modified by using the kernel-level packet filter and mangling system iptables of the aggregator computer **210** so that the destination address for both packets is rewritten in the IP packet to 172.16.0.3, which is an aliased address assigned during virtual circuit set-up to point to the demux computer **240.** The destination port addresses are not checked or changed at this time.

In **803,** the packets are then passed in serial fashion on a first-come-first-served fashion to the kernel of the aggregator computer **210** which looks at the source and destination IP addresses indicated in each packet. The kernel, finding that the destination address in each packet is not a local address, but one that is in its routing table in a static route to the demux computer **240,** routes the packets over the inter-site VPN tunnel **220** to the demux computer **240.** At this point, the first IP packet has a source IP address of 1.1.1.1 and a destination IP address of 172.16.0.2 with destination port 4000, and the second IP packet has a source IP address of 3.3.3.3 and a destination IP address of 172.16.0.3 with destination port 5000.

In **804,** the packets are received at the demux computer **240,** and in **805,** their destination IP addresses are again re-written before passing the packets to the kernel of the demux computer **240.** This time, the destination ports for each of the packets is examined at OSI Layer 4 to determine the application computer that is to process the packet, as well as at OSI Layer 3 to determine their destination IP addresses. For the first packet, its destination port 4000 indicates that it is to be processed by application computer **261,** therefore its destination address is re-written to an Ethernet address 172.17.0.2 corresponding to the application computer **261.** On the other hand, for the second packet, its destination port 5000 indicates that it is to be processed by application computer **262,** therefore its destination address is re-written to an Ethernet address 172.17.0.3 corresponding to the application computer **262.**

After the destination IP addresses are rewritten in the packets, the packets are passed to the kernel of the demux computer **240.** The kernel sees that the destination addresses of the packets are not a local addresses, but ones that are in its routing table, so in **806,** it routes the first packet over Ethernet **250** to the application computer **261** that is to process that packet and it routes the second packet over Ethernet **250** to the application computer **262** that is to process that packet.

In **807**, the application computer **261** receives the first packet from the demux computer **240,** and its kernel determines that the packet has a destination IP address that is a local address. Therefore, in **808,** it delivers the packet to an application program that is bound to its Ethernet address and the correct port. Also, in **807**, the application computer **262** receives the second packet from the demux computer **240,** and its kernel also determines that the packet has a destination IP address that is a local address. Therefore, in **808,** it also delivers its packet to an application program that is bound to its Ethernet address and the correct port.

In **809;** the application programs on the application computers 261 and 262 then process their respective packets, and generate reply packets if appropriate. The reply packets are then passed back to their respective kernels, and in **810,** each of the kernels sends its respective reply packet out through a common default gateway, which is pointed at the remultiplexing egress router ("remux") computer **271.** Each of the reply packets at this point has its source and destination IP addresses reversed so that the first reply packet has a source IP address of 172.17.0.2 (i.e., the Ethernet address of the application computer **261)** with source port 4000 and a destination IP address of 2.2.2.2 (i.e., the IP address of the client computer **121)**, and the second reply packet has a source IP address of 172.17.0.3 (i.e., the Ethernet address of the application computer **262)** with source port 5000 and a destination IP address of 3.3.3.3 (i.e., the IP address of the client computer **122).**

In **811,** the reply packets are received at the remux computer **271.** Before passing the reply packets to their respective kernels, in **812,** the packet filter of the remux computer **271** first re-writes their source addresses according to re-write rules previously provided to the remux computer **271** during set up of the two virtual circuits. Accordingly, the source IP address of the first reply packet is re-written from the Ethernet address 172.17.0.2 to 2.2.2.2, leaving the source port 4000 unchanged. Likewise, the source IP address of the second reply packet is re-written from the Ethernet address of 172.17.0.3 to 2.2.2.2, leaving the source port 5000 unchanged.

In **813,** the reply packets are then passed back to the kernel of the remux computer **271.** Since the kernel determines that both reply packets have destination addresses that are not local, it passes both reply packets out its default gateway to be sent back to their respective destination IP addresses. At this time, the first reply packet has a source IP address of 2.2.2.2 with source port 4000 and destination IP address of 1.1.1.1, so that it appears to the client computer **121** at the destination IP address that the reply packet is being sent from the DSL modem **211** that received its corresponding original packet. Likewise, the second reply packet has a source IP address of 2.2.2.2 with source port 5000 and destination IP address of 3.3.3.3, so that it appears to the client computer **122** at the destination IP address that the reply packet is being sent from the DSL modem **212** that received its corresponding original packet.

Although the various aspects of the present invention have been described with respect to a preferred embodiment, it will be understood that the invention is entitled to full protection within the full scope of the appended claims.

## Claims

1. A method for communicating with devices (121-123,131-133,141-143) in a decentralized network, comprising:
receiving a packet from a device (121) in a point of presence (111), the point of presence (111) being remote from a centralized data center (101);
routing the packet according to a virtual circuit (220) from the point of presence to an application computer (261) of the centralized data center (101) wherein the virtual circuit is defined such that subsequently received packets in the point of presence (111) from the device are also routed according to the virtual circuit from the point of presence (111) to the application computer (261), wherein routing the packet according to the virtual circuit includes rewriting a destination address in the packet from an original destination address to an address associated with the centralized data center (101), wherein the rewriting of the destination address is performed in accordance with re-write rules provided to the point of presence (111);
generating a reply packet by the application computer (261) processing information in the packet;
passing the reply packet to a remux computer (271) in a default gateway of the application computer (261);
re-writing the source IP address of the reply packet so as to include the original destination address associated with the point of presence (111) according to rewrite rules provided to the remux computer (271); and
transmitting the reply packet with the re-written source IP address back to the device from the remux computer (271), **characterised by** sending the packet over the internet along a defined path of transmission from the point of presence to the address associated with the centralized data center.

2. The method according to claim 1, wherein the reply packet indicates a destination IP address associated with the device.

3. The method according to claim 2, wherein the routing of the packet to the application computer (261) of the centralized data center (101) includes routing the packet to the centralized data center (101) according to a first static route defined in a routing table of a first computer (210) in the point of presence (111).

4. The method according to claim 1, wherein the routing of the packet to the application computer (261) of the centralised data center (101) comprises:
rewriting the destination address in the packet from the address associated with the centralized data center (101) to an address associated with the application computer (261) in the centralized data center (101); and
routing the packet to the application computer (261);
and generation of the reply packet comprises:
processing the packet with an application program residing on the application computer (261) to generate the reply packet.

5. The method according to claim 4, wherein the packet is routed to the application computer (261) according to a static route defined in a routing table of a second computer (240) in the centralized data center (101).

6. The method according to claim 4, wherein a second computer in the centralized data center (101) and the application computer (261) communicate through an Ethernet network (250), and the address associated with the application computer (261) is an Ethernet address assigned to the application computer (261).

7. The method according to claim 6, further comprising: determining the Ethernet address using information of a destination port indicated in the packet.

8. A method as claimed in claim 1, further comprising:
receiving a request to establish the virtual circuit including a first computer (210) in the point of presence (111), a second computer (240) in the centralized data center (101), and the application computer (261) initiating the request; and
sending first re-write rules to the first computer (210) and second re-write rules to the second computer (240) when establishing the virtual circuit so that the first rewrite rules cause the first computer (210) to re-write a destination address included in a packet of information received from the device in the decentralized network to be re-written from an original destination address to an address associated with the second computer (240), and the second re-write rules cause the second computer (240) to re-write the destination address from the address associated with the second computer (240) to an address associated with the application computer (261) after receiving the packet from the first computer (210).

9. The method according to claim 8, further comprising sending a first static route to the first computer (210) and a second static route to the second computer (240) when establishing the virtual circuit so that the first static route instructs the first computer (210) to route the packet received from the device to the second computer (240) and the second static route instructs the second computer (240) to route the packet to the application computer (261) after receiving the packet from the first computer (210).

10. The method according to claim 8, wherein the address associated with the application computer (261) is an Ethernet address, and further comprising sending third rewrite rules to a third computer (271) of a default gateway of the application computer (261) so that the third computer re-writes a source address in a reply packet generated by the application computer (261) from the Ethernet address associated with the application computer (261) to the original destination address.

11. A method according to claim 1 wherein the generation of the reply packet by the application computer (261) processing information of the packet comprises:
receiving a packet from the point of presence (111) that has re-written a destination address in the packet from an original destination address associated with the point of presence (111) to an address associated with a first node (240) of the centralized network;
re-writing the destination address from the address associated with the first node (240) to an address associated with the application computer (261) of the centralized data center (101);
routing the packet to the application computer (261) according to a static route defined in a routing table of the first node (240); and generating a reply packet by processing information in the packet using an application program residing on the application computer (261).

12. The method according to claim 11, wherein the centralized data center (101) has an Ethernet network (250) and the address associated with the application computer (261) is an Ethernet address.

13. The method according to claim 12, further comprising: determining the Ethernet address using information included in a destination port indicated in the packet.

14. The method according to claim 11, wherein the receiving of the packet from the point of presence (111) is received by the first node (240) of the centralized data center (101) over the Internet, and the address associated with the first node (240) is an IP address

15. The method according to claim 11, wherein the receiving of the packet from the point of presence (111) is received by the first node (240) of the centralized data center (101) through a virtual private network over the Internet, and the address associated with the first node (240) is an aliased address.

## Patentansprüche

1. Verfahren zum Kommunizieren mit Einrichtungen (121-123, 131-133, 141-143) in einem dezentralen Netzwerk, das Folgendes umfasst:
Empfangen eines Pakets von einer Einrichtung (121) an einer Anwesenheitsstelle (111), wobei die Anwesenheitsstelle (111) von einem zentralisierten Datenzentrum (101) entfernt ist;
Leiten des Pakets gemäß einer virtuellen Schaltung (220) von der Anwesenheitsstelle an einen Applikationsrechner (261) des zentralisierten Datenzentrums (101), wobei die virtuelle Schaltung derartig definiert ist, dass nachfolgend an der Anwesenheitsstelle (111) von der Einrichtung empfangene Pakete ebenfalls gemäß der virtuellen Schaltung von der Anwesenheitsstelle (111) an den Applikationsrechner (261) geroutet werden, wobei das Routen des Pakets gemäß der virtuellen Schaltung ein Umschreiben der Zieladresse in dem Paket von der ursprünglichen Zieladresse zu einer Adresse, die mit dem zentralisierten Datenzentrum (101) assoziiert ist, einschließt, wobei das Umschreiben der Zieladresse gemäß Umschreibregeln durchgeführt wird, die der Anwesenheitsstelle (111) bereitgestellt werden;
Erzeugen eines Antwortpakets durch den Applikationsrechner (261), der Informationen in dem Paket verarbeitet;
Weitergeben des Antwortpakets an einen Remux-Rechner (271) in einem Standardgateway des Applikationsrechners (261);
derartiges Umschreiben der Quellen-IP-Adresse des Antwortpakets, dass sie die ursprüngliche Zieladresse, die mit der Anwesenheitsstelle (111) assoziiert ist, einschließt, gemäß den Umschreibregeln, die dem Remux-Rechner (271) bereitgestellt werden; und
Übertragen des Antwortpakets mit der umgeschriebenen Quellen-IP-Adresse von dem Remux-Rechner (271) zurück an die Einrichtung, **gekennzeichnet durch** Senden des Pakets über das Internet, entlang eines definierten Übertragungspfades, von der Anwesenheitsstelle an die Adresse, die mit dem zentralisierten Datenzentrum assoziiert ist.

2. Verfahren nach Anspruch 1, wobei das Antwortpaket eine Ziel-IP-Adresse anzeigt, die mit der Einrichtung assoziiert ist.

3. Verfahren nach Anspruch 2, wobei das Leiten des Pakets an den Applikationsrechner (261) des zentralisierten Datenzentrums (101) ein Routen des Pakets an das zentralisierte Datenzentrum (101) gemäß einer ersten statischen Route in einer Routing-Tabelle eines ersten Rechners (210) an der Anwesenheitsstelle (111) einschließt.

4. Verfahren nach Anspruch 1, wobei das Routen des Pakets an den Applikationsrechner (261) des zentralisierten Datenzentrums (101) Folgendes umfasst:
Umschreiben der Zieladresse in dem Paket von der Adresse, die mit dem zentralisierten Datenzentrum (101) assoziiert ist, zu einer Adresse, die mit dem Applikationsrechner (261) in dem zentralisierten Datenzentrum (101) assoziiert ist; und Routen des Pakets an den Applikationsrechner (261);
und wobei das Erzeugen des Antwortpakets Folgendes umfasst: Verarbeiten des Pakets mit einem Applikationsprogramm, das sich auf dem Applikationsrechner (261) befindet, um ein Antwortpaket zu erzeugen.

5. Verfahren nach Anspruch 4, wobei das Paket gemäß einer statischen Route an den Applikationsrechner (261) geroutet wird, die in einer Routing-Tabelle eines zweiten Rechners (240) in dem zentralisierten Datenzentrum (101) definiert ist.

6. Verfahren nach Anspruch 4, wobei ein zweiter Rechner in dem zentralisierten Datenzentrum (101) und der Applikationsrechner (261) über ein Ethernet-Netzwerk (250) kommunizieren, und wobei die Adresse, die mit dem Applikationsrechner (261) assoziiert ist, eine Ethernet-Adresse ist, die dem Applikationsrechner (261) zugewiesen ist.

7. Verfahren nach Anspruch 6, ferner umfassend: Bestimmen der Ethernet-Adresse unter Verwendung von Informationen eines Zielports, die in dem Paket angezeigt werden.

8. Verfahren nach Anspruch 1, ferner umfassend:
Empfangen einer Anfrage zum Etablieren der virtuellen Schaltung, das einen ersten Rechner (210) an der Anwesenheitsstelle (111), einen zweiten Rechner (240) an dem zentralisierten Datenzentrum (101) und den Applikationsrechner (261), der die Anfrage initiiert, einschließt; und
Senden von ersten Umschreibregeln an den ersten Rechner (210) und zweiten Umschreibregeln an den zweiten Rechner (240) beim Etablieren der virtuellen Schaltung, sodass die ersten Umschreibregeln den ersten Rechner (210) veranlassen, eine Zieladresse umzuschreiben, die in einem Paket von Informationen eingeschlossen sind, das von der Einrichtung kommend in dem dezentralisierten Netzwerk empfangen wird, um von einer ursprünglichen Zieladresse zu einer Adresse umgeschrieben zu werden, die mit dem zweiten Rechner (240) assoziiert ist, und wobei die zweiten Umschreibregeln den zweiten Rechner (240) veranlassen, die Zieladresse von der Adresse, die mit dem zweiten Rechner (240) assoziiert ist, zu einer Adresse umzuschreiben, die mit dem Applikationsrechner (261) assoziiert ist, nachdem er das Paket von dem ersten Rechner (210) empfangen hat.

9. Verfahren nach Anspruch 8, ferner umfassend Senden einer ersten statischen Route an den ersten Rechner (210) und einer zweiten statischen Route an den zweiten Rechner (240), beim Etablieren der virtuellen Schaltung, sodass die erste statische Route den ersten Rechner (210) anweist, das von der Einrichtung empfangene Paket an den zweiten Rechner (240) zu routen und die zweite statische Route den zweiten Rechner (240) anweist, das Paket nach dem Empfang des Pakets von dem ersten Rechner (210) an den Applikationsrechner (261) zu routen.

10. Verfahren nach Anspruch 8, wobei die Adresse, die mit dem Applikationsrechner (261) assoziiert ist, eine Ethernet-Adresse ist, und das ferner Senden von dritten Umschreibregeln an einen dritten Rechner (271) eines Standardgateways des Applikationsrechners (261) umfasst, sodass der dritte Rechner in einem Antwortpaket, das von dem Applikationsrechner (261) erzeugt wurde, eine Quellenadresse von einer Ethernet-Adresse, die mit dem Applikationsrechner (261) assoziiert ist, zu der ursprünglichen Zieladresse umschreibt.

11. Verfahren nach Anspruch 1, wobei das Erzeugen eines Antwortpakets durch die Applikationsrechner (261), der Informationen des Pakets verarbeitet, Folgendes umfasst:
Empfangen eines Pakets von einer Anwesenheitsstelle (111), das eine Zieladresse in dem Paket von einer ursprünglichen Zieladresse, die mit der Anwesenheitsstelle (111) assoziiert ist, zu einer Andresse, die mit einem ersten Knoten (240) in einem zentralisierten Netzwerk assoziiert ist, umgeschrieben hat;
Umschreiben der Zieladresse von der Adresse, die mit dem ersten Knoten (240) assoziiert ist, zu einer Andresse, die mit dem Applikationsrechner (261) des zentralisierten Datenzentrums (101) assoziiert ist;
Routen des Pakets an den Applikationsrechner (261) gemäß einer statischen Route, die in einer Routing-Tabelle des ersten Knotens (240) definiert ist; und Erzeugen eines Antwortpakets durch ein Verarbeiten von Informationen in dem Paket unter Verwendung eines Applikationsprogramms, das sich auf dem Applikationsrechner (261) befindet.

12. Verfahren nach Anspruch 11, wobei das zentralisierte Datenzentrum (101) ein Ethernet-Netzwerk (250) aufweist und die Adresse, die mit dem Applikationsrechner (261) assoziiert ist, eine Ethernet-Adresse ist.

13. Verfahren nach Anspruch 12, ferner umfassend: Bestimmen der Ethernet-Adresse unter Verwendung von Informationen, die in einem Zielport eingeschlossen sind, der in dem Paket angezeigt wird.

14. Verfahren nach Anspruch 11, wobei das Paket von der Anwesenheitsstelle (111) von dem ersten Knoten (240) des zentralisierten Datenzentrums (101) über das Internet empfangen wird, und die Adresse, die mit dem ersten Knoten (240) assoziiert ist, eine IP-Adresse ist.

15. Verfahren nach Anspruch 11, wobei das Paket von der Anwesenheitsstelle (111) von dem ersten Knoten (240) des zentralisierten Datenzentrums (101) durch ein virtuelles privates Netzwerk über das Internet empfangen wird, und die Adresse, die mit dem ersten Knoten (240) assoziiert ist, eine Alias-Adresse ist.

## Revendications

1. Procédé pour communiquer avec des dispositifs (121-123, 131-133, 141-143) dans un réseau décentralisé, comprenant :
la réception d'un paquet depuis un dispositif (121) dans un point de présence (111), le point de présence (111) étant distant d'un centre de données centralisées (101) ;
l'acheminement du paquet selon un circuit virtuel (220) du point de présence à un ordinateur d'application (261) du centre de données centralisées (101) dans lequel le circuit virtuel est défini de sorte que des paquets reçus ultérieurement dans le point de présence (111) depuis le dispositif sont également acheminés selon le circuit virtuel du point de présence (111) à l'ordinateur d'application (261), dans lequel l'acheminement du paquet selon le circuit virtuel inclut la réécriture d'une adresse de destination dans le paquet d'une adresse de destination originale à une adresse associée au centre de données centralisées (101), dans lequel la réécriture de l'adresse de destination est réalisée selon des règles de réécriture fournies au point de présence (111) ;
la génération d'un paquet de réponse par l'ordinateur d'application (261) traitant des informations dans le paquet ;
la remise du paquet de réponse à un ordinateur de remultiplexage (271) dans une passerelle par défaut de l'ordinateur d'application (261) ;
la réécriture de l'adresse IP source du paquet de réponse afin d'inclure l'adresse de destination originale associée au point de présence (111) selon des règles de réécriture fournies à l'ordinateur de remultiplexage (271) ; et
la transmission en retour du paquet de réponse avec l'adresse IP source réécrite au dispositif depuis l'ordinateur de remultiplexage (271), **caractérisé par** l'envoi du paquet sur l'Internet le long d'un chemin de transmission défini, du point de présence à l'adresse associée au centre de données centralisées.

2. Procédé selon la revendication 1, dans lequel le paquet de réponse indique une adresse IP de destination associée au dispositif.

3. Procédé selon la revendication 2, dans lequel l'acheminement du paquet vers l'ordinateur d'application (261) du centre de données centralisées (101) inclut l'acheminement du paquet vers le centre de données centralisées (101) selon un premier itinéraire statique défini dans une table d'acheminement d'un premier ordinateur (210) dans le point de présence (111).

4. Procédé selon la revendication 1, dans lequel l'acheminement du paquet vers l'ordinateur d'application (261) du centre de données centralisées (101) comprend :
la réécriture de l'adresse de destination dans le paquet de l'adresse associée au centre de données centralisées (101) à une adresse associée à l'ordinateur d'application (261) dans le centre de données centralisées (101) ; et
l'acheminement du paquet vers l'ordinateur d'application (261) ;
et la génération du paquet de réponse comprend :
le traitement du paquet avec un programme d'application résidant sur l'ordinateur d'application (261) pour générer le paquet de réponse.

5. Procédé selon la revendication 4, dans lequel le paquet est acheminé vers l'ordinateur d'application (261) selon un itinéraire statique défini dans une table d'acheminement d'un deuxième ordinateur (240) dans le centre de données centralisées (101).

6. Procédé selon la revendication 4, dans lequel un deuxième ordinateur dans le centre de données centralisées (101) et l'ordinateur d'application (261) communiquent par le biais d'un réseau Ethernet (250), et l'adresse associée à l'ordinateur d'application (261) est une adresse Ethernet attribuée à l'ordinateur d'application (261).

7. Procédé selon la revendication 6, comprenant en outre : la détermination de l'adresse Ethernet à l'aide d'informations d'un port de destination indiqué dans le paquet.

8. Procédé selon la revendication 1, comprenant en outre :
la réception d'une requête pour établir le circuit virtuel incluant un premier ordinateur (210) dans le point de présence (111), un deuxième ordinateur (240) dans le centre de données centralisées (101), et l'ordinateur d'application (261) déclenchant la requête ; et
l'envoi de premières règles de réécriture au premier ordinateur (210) et de deuxièmes règles de réécriture au deuxième ordinateur (240) lors de l'établissement du circuit virtuel afin que les premières règles de réécriture amènent le premier ordinateur (210) à réécrire une adresse de destination, incluse dans un paquet d'informations reçu du dispositif dans le réseau décentralisé, à réécrire une adresse de destination originale à une adresse associée au deuxième ordinateur (240), et les deuxièmes règles de réécriture amènent le deuxième ordinateur (240) à réécrire l'adresse de destination de l'adresse associée au deuxième ordinateur (240) à une adresse associée à l'ordinateur d'application (261) après la réception du paquet depuis le premier ordinateur (210).

9. Procédé selon la revendication 8, comprenant en outre l'envoi d'un premier itinéraire statique au premier ordinateur (210) et d'un second itinéraire statique au deuxième ordinateur (240) lors de l'établissement du circuit virtuel afin que le premier itinéraire statique charge le premier ordinateur (210) d'acheminer le paquet reçu du dispositif au deuxième ordinateur (240) et le second itinéraire statique charge le deuxième ordinateur (240) d'acheminer le paquet vers l'ordinateur d'application (261) après la réception du paquet depuis le premier ordinateur (210).

10. Procédé selon la revendication 8, dans lequel l'adresse associée à l'ordinateur d'application (261) est une adresse Ethernet, et comprenant en outre l'envoi de troisièmes règles de réécriture à un troisième ordinateur (271) d'une passerelle par défaut de l'ordinateur d'application (261) afin que le troisième ordinateur réécrive une adresse source dans un paquet de réponse généré par l'ordinateur d'application (261) de l'adresse Ethernet associée à l'ordinateur d'application (261) à l'adresse de destination originale.

11. Procédé selon la revendication 1, dans lequel la génération du paquet de réponse par l'ordinateur d'application (261) traitant des informations du paquet comprend :
la réception d'un paquet depuis le point de présence (111) qui a réécrit une adresse de destination dans le paquet d'une adresse de destination originale associée au point de présence (111) à une adresse associée à un premier noeud (240) du réseau centralisé ;
la réécriture de l'adresse de destination de l'adresse associée au premier noeud (240) à une adresse associée à l'ordinateur d'application (261) du centre de données centralisées (101) ;
l'acheminement du paquet vers l'ordinateur d'application (261) selon un itinéraire statique défini dans une table d'acheminement du premier noeud (240) ; et la génération d'un paquet de réponse par traitement d'informations dans le paquet à l'aide d'un programme d'application résidant sur l'ordinateur d'application (261).

12. Procédé selon la revendication 11, dans lequel le centre de données centralisées (101) a un réseau Ethernet (250) et l'adresse associée à l'ordinateur d'application (261) est une adresse Ethernet.

13. Procédé selon la revendication 12, comprenant en outre : la détermination de l'adresse Ethernet à l'aide d'informations incluses dans un port de destination indiqué dans le paquet.

14. Procédé selon la revendication 11, dans lequel la réception du paquet en provenance du point de présence (111) est reçue par le premier noeud (240) du centre de données centralisées (101) sur l'Internet et l'adresse associée au premier noeud (240) est une adresse IP.

15. Procédé selon la revendication 11, dans lequel la réception du paquet en provenance du point de présence (111) est reçue par le premier noeud (240) du centre de données centralisées (101) par le biais d'un réseau privé virtuel sur l'Internet et l'adresse associée au premier noeud (240) est une adresse alias.
